# DEMANDE DE BREVET EUROPEEN

(11) **EP 1 039 771 A1**
(43) Date de publication de la demande: **27.09.2000**
(21) Numéro de dépôt: 00400783.7
(22) Date de dépôt: 22.03.2000
(51) Int. Cl.: H04Q 7/38

(54) **Procédé de protection radio électrique d'une zone contre l'usage de téléphones mobiles**

(30) Priorité: 22.03.1999 FR 9903513
(71) Demandeur: ALCATEL, 75008 Paris (FR)
(72) Inventeur: Pinault, Francis, 92270 Bois-Colombes (FR); Rousseau, Didier, 95000 Cergy (FR); Brandon, Alexandre, 92250 La Garenne Colombes (FR)
(74) Mandataire: Croonenbroek, Thomas Jakob

(57) **Abrégé**

Pour limiter dans une zone sensible (19) des communications intempestives avec des téléphones mobiles (5 - 7), on place dans cette zone une station de base (20) prioritaire (22). Dans un exemple cette station de base est prioritaire car le téléphone mobile comporte une préférence pour un type de station de base représenté par cette dernière. La station de base prioritaire gère alors exclusivement la relation avec les téléphones mobiles pour en neutraliser les émissions-réceptions.

## Description

La présente invention a pour objet un procédé de protection radioélectrique utilisable essentiellement dans le domaine de la téléphonie mobile. Le but de l'invention est de limiter des interventions intempestives de sonneries ou de conversations échangées avec des téléphones mobiles dans des zones publiques sensibles, notamment des théâtres, des salles de cinéma, des salles de conférences,

Les systèmes disponibles des amphithéâtres d'universités ou autres actuellement pour empêcher le développement de ce type de communication sont assez simplistes. Ils sont essentiellement constitués de brouilleurs ou d'émetteurs qui envoient des ordres simples aux téléphones mobiles, interdisant les sonneries par exemple. Les brouilleurs émettent, aléatoirement et sur toutes les fréquences d'une gamme, des signaux de brouillage avec une puissance non négligeable. Ces signaux de brouillage se superposent pour les téléphones mobiles situés dans l'environnement de ces brouilleurs à des signaux de signalisation ou à des signaux de parole qui leur sont destinés. Ces téléphones mobiles sont alors incapables d'interpréter les signaux résultant de cette superposition : les communications décrochent.

De tels systèmes présentent l'inconvénient qu'on ne sait pas limiter d'une manière efficace les zones de diffusion des bruits de neutralisation. En conséquence certaines régions qui ne sont pas à protéger, mais qui sont situées à proximité d'une zone ainsi protégée, sont affectées par ces diffusions de bruits. Dans ces zones, la communication avec des téléphones mobiles devient aléatoire voire impossible.

En outre, la mise en place de tels brouilleurs est illégale.

Dans le cas des ordres envoyés aux téléphones mobiles pour interdire les sonneries, ces ordres n'empêchent pas l'établissement des communications. Les émetteurs simples doivent par ailleurs disposer d'un moyen universel de communiquer avec ces terminaux, ce qui est difficile à réaliser. La technologie infrarouge n'est par exemple pas présente dans tous les téléphones mobiles. Il convient néanmoins de résoudre le problème par lequel une communication d'un seul en gêne beaucoup d'autres, en neutralisant à la fois les appels entrants, ceux qui déclenchent une sonnerie d'un téléphone mobile, et les appels sortants, ceux par lesquels un détenteur d'un téléphone mobile cherche à entrer en relation avec un interlocuteur distant.

Ce problème est résolu, selon l'invention, en disposant dans la zone de protection radioélectrique non pas un brouilleur mais une station de base prioritaire. D'une manière normale, une zone, en particulier une zone sensible se trouve sous la couverture radioélectrique d'une station de base d'un, voire de plusieurs, opérateurs de téléphonie mobile. C'est justement parce que cette zone sensible se trouve ainsi couverte que les problèmes naissent.

L'idée de l'invention est alors de constituer une station de base prioritaire en couverture de cette zone sensible. De ce fait la zone sensible sera couverte deux fois (au moins). Elle sera couverte par une zone de couverture d'une station de base normale d'un opérateur de téléphonie mobile, et par la station de base prioritaire, celle-ci devant s'affranchir des contraintes de rattachement d'un téléphone mobile à un opérateur spécifique. En effet, la station de base prioritaire doit pouvoir communiquer avec les téléphones mobiles qui sont sous sa couverture, quelques soient leurs caractéristiques d'abonnement. Dans une réalisation de l'invention, la station de base prioritaire adopte un mode de gestion des communications tel qu'il conduit à la neutralisation des communications. Les appels entrants ne sont plus acheminés. Pour les appels sortants le téléphone mobile reçoit un message d'indisponibilité du réseau.

Il y a plusieurs moyens de rendre une station de base prioritaire. Selon un perfectionnement de l'invention, les communications de téléphones mobiles seront mieux neutralisées si ces téléphones mobiles échangent avec une station de base selon une norme dite CTS. Dans une telle norme, on distingue des stations de base privées et des stations de base publiques. Dans ce cas, notamment pour des raisons de coût, les téléphones mobiles sont munis de dispositifs qui les amènent à basculer automatiquement d'une utilisation de type public à une utilisation de type privé. En pratique avec une utilisation privée leurs communications sont acheminées, depuis la station de base privée jouant un rôle d'autocommutateur privé, par un réseau téléphonique commuté public, à moindre coût. Donc les téléphones mobiles possèdent une hiérarchie d'utilisation, l'utilisation privée étant prioritaire sur l'utilisation publique. Dans un exemple préféré, une station de base prioritaire selon l'invention est une station qui se fait reconnaître des téléphones mobiles comme une station de base privée engendrant par-là même la commutation de mode d'utilisation de ce téléphone mobile.

Selon un deuxième mode de réalisation, la station de base prioritaire communique avec les téléphones mobiles qui se trouvent dans la zone de protection, au moyen d'un protocole de communication radio de faible portée, du type Bluetooth.

Suivant une première variante, cette station de base prioritaire envoie aux téléphones mobiles se trouvant dans ladite zone un message de déconnexion au réseau de radiocommunication auquel ils sont rattachés.

Suivant une deuxième variante, la station de base prioritaire est connectée au réseau public commuté et gère la communication avec les téléphones mobiles se trouvant dans ladite zone, d'une manière similaire au mode de réalisation utilisant la norme CTS.

L'invention a donc pour objet un procédé de protection radioélectrique d'une zone en téléphonie mobile dans lequel
- on émet à partir de stations de base des appels entrants à destination de téléphones mobiles,
- on reçoit dans des stations de base des appels sortants émanant de téléphones mobiles,
- on place une station de base prioritaire dans la zone et on neutralise avec cette station de base prioritaire des accès aux téléphones mobiles qui s'y trouvent
caractérisé en ce que la station de base prioritaire est apte à se faire reconnaître des téléphones mobiles quelques soient leurs caractéristiques d'abonnement.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: une représentation schématique d'un réseau de téléphonie mobile, une station de base prioritaire, et une première réalisation du principe de l'invention de la neutralisation d'une zone sensible par cette station de base prioritaire ;
- Figures 2a et 2b : une représentation comparée des étapes de reconnaissance, dans un procédé classique et dans un procédé selon l'invention respectivement, et de gestion d'une communication téléphonique par une station de base.
- Figure 3 : une deuxième réalisation du principe de l'invention de la neutralisation d'une zone sensible par une station de base prioritaire.

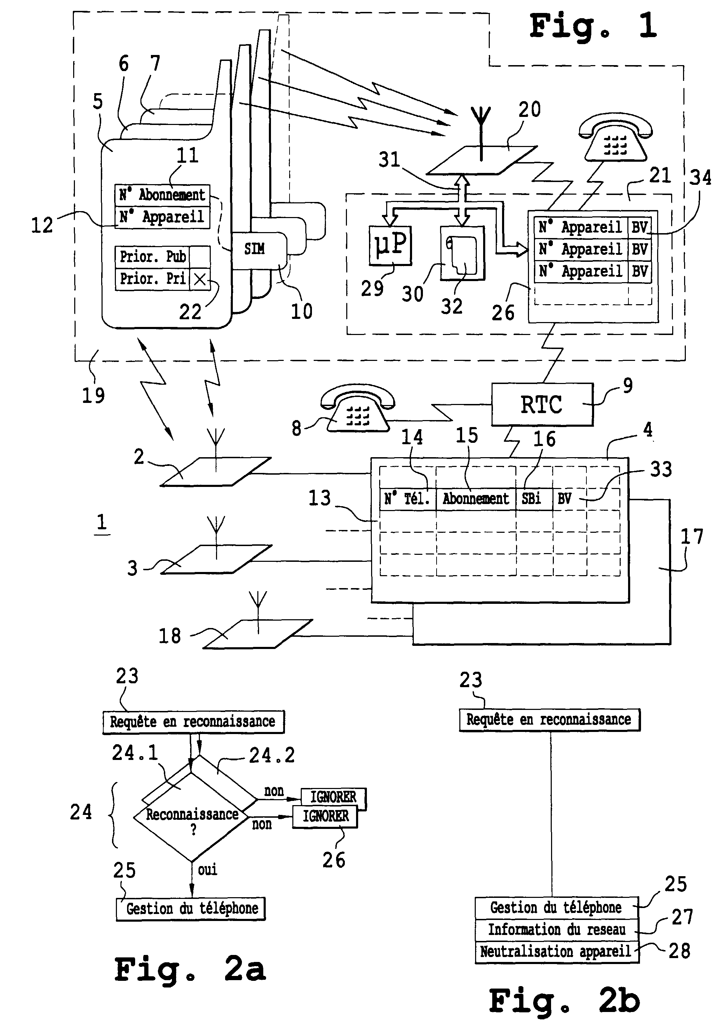

La figure 1 montre l'ensemble des moyens utilisables pour mettre en oeuvre le procédé de l'invention. Un réseau 1 de téléphonie mobile est constitué par un ensemble de stations de base telles que 2 et 3 reliées aux circuits centraux 4 d'un opérateur de téléphonie mobile. Avec les stations de base 2 et 3, des téléphones mobiles tels que 5 à 7 peuvent entrer en relation, soit les uns avec les autres, soit avec d'autres interlocuteurs téléphoniques joignables par exemple par des postes téléphoniques 8. En pratique, un réseau téléphonique commuté 9 est souvent interposé dans la liaison entre les téléphones mobiles 5 à 7 et un poste 8. Le mode de gestion des téléphones mobiles par le réseau 4 est de type connu. Il souscrit notamment à certaines normes. On connaît notamment la norme GSM (Global System for Mobile, système global de téléphonie mobile) et ses déclinaisons dans différentes bandes de fréquence (DCS, PCS, UMTS...).

Selon la norme GSM, chaque téléphone mobile 5 est muni dans ses circuits d'un circuit 10 dit SIM (Subscriber Identity Module: module d'identification d'abonné) qui renseigne essentiellement sur des références d'un abonnement souscrit par le détenteur du téléphone mobile 5 avec l'opérateur qui gère les services centraux 4. En définitive le circuit SIM 10 contient une information 11 de référence d'abonnement. Cette information porte aussi l'appellation IMSI (International Mobile Subscriber Information : information internationale d'abonné). Dans d'autres mémoires du téléphone 5 celui-ci comporte une information 12 relative à un numéro de série ou plus généralement à un numéro d'appareil du téléphone 5. Ce dernier numéro porte aussi l'appellation IMEI (International Mobile Equipment Identification : numéro d'identification internationale)

Dans les circuits centraux 4, on distingue essentiellement une mémoire 13 de correspondance permettant de suivre les déplacements des téléphones mobiles 5 et de leur adresser toutes les communications qui leur sont destinées. La mémoire 13, ici schématiquement représentée, comporte des enregistrements avec plusieurs champs. Un premier champ 14 est un champ comportant un numéro de téléphone par lequel un téléphone mobile peut être joint. Un deuxième champ 15 est un champ correspondant aux caractéristiques de l'abonnement souscrit par le propriétaire du téléphone mobile. En pratique, dans un enregistrement, le champ 15 comporte les indications qui correspondent à celles qui sont mémorisées dans le circuit SIM 10. Dans un troisième champ 16, la mémoire 13 tient à jour le nom de la ou des stations de base par lesquelles le téléphone mobile 5 peut être joint.

L'organisation de ces moyens et la mise à jour de la mémoire 13 se réalisent de la manière suivante. Au moment de l'allumage d'un téléphone 5, celui-ci transmet aux circuits centraux 4 les caractéristiques 11 de son abonnement. Cette transmission s'effectue par l'intermédiaire d'une station de base, par exemple la station de base 2. Dans ce cas les circuits centraux 4 complètent l'enregistrement correspondant de la table 13 pour inscrire en regard des champs 14 et 15 (qui sont indéfectiblement liés l'un à l'autre), les références d'une station de base SBi, ici la station 2, dans le champ 16 par lequel le téléphone mobile a signalé sa mise en service. La mise en regard est réalisée simplement car les circuits 4 ont reçu les caractéristiques 11 et peuvent rechercher l'enregistrement qui leur correspond. Si un interlocuteur, à partir d'un poste 8 cherche à joindre le détenteur du téléphone 5, il compose le numéro de téléphone attribué à ce dernier. Dans la table 13, les circuits centraux 4 permettent de trouver en regard du numéro de téléphone dans le champ 14, le nom de la station de base SBi dans le champ 16 par laquelle ce téléphone 5 peut être joint. Par la suite les circuits 4 activent la station de base SBi et cette station de base émet un appel entrant. En pratique, elle fait sonner la sonnerie du téléphone 5 (ou l'avertit de toute autre façon).

Il est possible que plusieurs opérateurs de téléphonie mobile existent et gouvernent ensemble des mêmes régions. Par exemple des circuits centraux 17 d'un deuxième opérateur de téléphone mobile permettent par des stations de base telles que 18 de couvrir des mêmes zones que les stations de base 2 et 3. Au moment de l'allumage, un téléphone 5 ne peut valablement se faire enregistrer et, ne peut valablement faire compléter un champ 16, que dans les circuits centraux 4 de l'opérateur avec lequel il est contractuellement lié. Le circuit 17 ne reconnaît par exemple pas les caractéristiques d'abonnement destinées aux circuits 4.

Dans un domaine sensible 19, représenté schématiquement par un espace parallélépipédique en tirets, on a placé une station de base privée 20. La station 20 est en relation avec des circuits privés 21 de commutation. La station de base privée 20 est soit une station de base domestique, utilisable à la maison, soit une station de base professionnelle : à usage dans le cadre d'une entreprise. Pour simplifier l'explication, la station de base 20 peut entrer en relation avec le téléphone 5 de la même façon que la station de base 2 pouvait l'avoir fait préalablement.

Cependant, la nature privée de cette station de base est concrétisée par une reconnaissance préalable du téléphone 5 par les circuits 21. Cette reconnaissance préalable est effectuée, par exemple une fois pour toute, lors de l'installation de la station 20 ou lors de l'achat d'un nouveau téléphone 5. Au cours de cette reconnaissance, on approche un téléphone 5 d'une station de base 20 et on lance, dans les circuits 21 une interrogation spécifique. Au cours de cette interrogation spécifique, le téléphone 5 envoie aux circuits 21 son information 12 de numéro d'appareil. L'échange se poursuit par l'acceptation et la mémorisation, dans les circuits 21, de l'enregistrement du numéro d'appareil correspondant à l'appareil 5.

Pour une mise en relation ultérieure, dans ces circuits 21, dans un mode connu normal, on ne vérifie pas les informations d'abonnement. En effet les caractéristiques d'abonnement sont gérées par l'opérateur du circuit 4 et non pas par un propriétaire des circuits 21. Cependant, pour éviter d'accepter dans le réseau de la station 20 n'importe quel téléphone mobile, dans les circuits 21 on vérifie que le numéro d'appareil 12 y est bien mémorisé.

Ce faisant, lorsque le téléphone 5 arrive dans l'environnement couvert par la station de base 2, il transmet à cette station de base 2 à la fois son numéro d'abonnement et son numéro d'appareil. Les circuits 4 l'enregistrent en utilisant essentiellement l'information de numéro d'abonnement. Par contre quand le téléphone 5 arrive dans l'environnement de la station de base 20, les circuits 21 l'enregistrent en prenant en compte essentiellement le numéro d'appareil qui a été préalablement reconnu au cours de la phase citée ci-dessus. Si le téléphone 5, ne possède pas un numéro d'abonnement correspondant à un service géré par l'opérateur du circuit 4, la station de base 2 l'ignore : ce téléphone ne peut pas entrer en relation avec elle. De même, si le téléphone 5 n'a pas été préalablement reconnu par la station de base 20 et les circuits 21, ces derniers l'ignorent.

Dans l'invention, pour protéger la zone 19 on l'a soumise à une station de base prioritaire.

Dans un premier exemple, la station de base prioritaire est une station de base 20 de type privée, répondant à la norme CTS (Cordless Telephone System), système de téléphonie sans fil. Cette mise en oeuvre est particulièrement intéressante parce que, dans la norme CTS, un téléphone 5 peut alternativement fonctionner avec une station de base privée 20 ou une station de base publique 2 (celle appartenant à l'opérateur des circuits 4). En effet dans ce cas, les protocoles d'échange avec les stations de base sont sensiblement les mêmes. La norme CTS est un complément de la norme GSM. Notamment des gestions de fréquences d'émissions, des synchronisations de fenêtres temporelles et d'une manière générale toute l'organisation de la mise en communication sont très proches. Les téléphones mobiles qui souscrivent à cette norme possèdent par ailleurs des circuits permettant de donner la priorité à un réseau plutôt qu'à un autre. Dans ce but, ils possèdent dans leurs mémoires une indication 22 permettant d'imposer que l'utilisation prioritaire sera une utilisation privée (ou au contraire une utilisation publique).

Selon cette norme CTS, lorsque la station de base 20 se fait reconnaître d'un téléphone 5, elle lui signale sa nature de station de base privée en même temps qu'elle lui envoie un message pour accepter de l'accueillir. Cette acceptation se passe de la manière suivante. Lors de la communication du téléphone 5 avec la station de base 2, le téléphone 5 émet régulièrement, au plus tard toutes les deux secondes, des messages de signalisation indiquant les références des stations de base avec lesquelles il est susceptible d'entrer en relation. La station de base 20, qui gouverne le même domaine, capte bien entendu ces messages. D'une part elle se reconnaît parmi les stations de base susceptibles d'entrer en relation avec le téléphone 5. D'autre part, elle peut reconnaître le numéro d'appareil du téléphone 5 dans une liste de mémorisée. Le cas échéant, elle émet à destination du téléphone 5 une invitation à se connecter puisque ce téléphone 5 a été reconnu par la comparaison du numéro d'appareil disponible en zone 12 à un numéro d'appareil mémorisé dans les circuits 21.

En application de la priorité concrétisée par l'information 22, le téléphone 5 se commute et passe en utilisation de la base privée. Ce fonctionnement connu apporte bien entendu à l'utilisateur la possibilité de réduire ses coûts de communication. En effet les circuits 21 de la station de base 20 sont reliés directement au réseau téléphonique commuté 9 permettant au téléphone 5 de jouir d'un tarif moins élevé que celui qui est normalement en vigueur dans le cadre de la téléphonie mobile.

Dans un deuxième exemple de réalisation, la station de base prioritaire est une station de base 20 de type privée, apte à communiquer avec les téléphones mobiles situés dans la zone qu'elle couvre au moyen d'un protocole de communication radio de faible portée, du type Bluetooth.

Cette norme est une technologie sans fil opérant dans la gamme de fréquences des 2,4 GHz, avec des débits numériques allant jusqu'à 721 kbit/s. Selon cette norme, un espace de communication est défini autour d'une station-maître, les appareils, tels que les téléphones mobiles, ayant un rôle d'esclave par rapport à cette station-maître, en se synchronisant sur celle-ci.

Dans la présente réalisation, la station de base prioritaire 20 se caractérise comme ladite station-maître.

De même que dans la réalisation CTS précitée, la station de base 20 est reliée directement au réseau téléphonique commuté 9 et se fait reconnaître d'un téléphone 5 comme station de base privée.

Par ailleurs, les téléphones mobiles qui souscrivent à cette norme possèdent dans leurs mémoires une indication 22 permettant d'imposer que l'utilisation prioritaire sera une utilisation privée.

Dans l'invention, on utilise une telle architecture (CTS, Bluetooth ou tout autre système équivalent) pour protéger radio électriquement la zone 19. Dans ce but, on dispose dans la zone 19 une station de base privée 20 et des circuits 21 de gestion de cette station de base privée. Néanmoins, ces circuits 21 vont être modifiés par rapport à leur version connue pour apporter une protection efficace contre les nuisances des appels téléphoniques intempestifs.

Sur la figure 2a, on a représenté, d'une manière schématique, l'entrée en relation d'un téléphone 5 avec une station de base publique 2 ou une station de base privée 20. Cette entrée en relation comporte principalement une requête en reconnaissance 23. Cette requête est émise soit par la station de base soit par le téléphone mobile. La requête en reconnaissance 23 est suivie d'un test 24 de reconnaissance du téléphone mobile par la station de base. Dans un test 24.1 la station de base est une station de base de type public et le test consiste à retrouver dans la mémoire 13 un champ 15 comportant les mêmes informations que l'information 11 de numéro d'abonnement. Dans le cas où la station de base est une station de base privée, un test 24.2 consiste à rechercher dans la mémoire des circuits 21 si un numéro 12 d'appareil correspondant à celui de l'appareil 5 a été préalablement enregistré. Dans l'un et l'autre cas, en cas de succès, l'étape 24 est suivie d'une étape 25 de gestion de la communication d'une manière connue. Si la reconnaissance ne se produit pas, tout simplement les stations de base ignorent en une opération 26 les téléphones mobiles qui ne sont pas reconnus.

Dans l'invention, figure 2b, l'étape 23 de requête en reconnaissance est directement suivie de l'étape 25 de gestion du téléphone. On a supprimé les tests de reconnaissance. Autrement dit, la station de base 20 de l'invention qui a détecté la présence d'un téléphone 5 dans son environnement, et qui ne connaissait pas ce téléphone mobile préalablement, n'aurait normalement pas dû envoyer un message d'acceptation du téléphone 5 pour dire qu'elle allait le gérer. Dans l'invention, du seul fait que le téléphone mobile est détecté par la station de base 20, celle-ci enregistre dans sa mémoire 26 un enregistrement correspondant au numéro 12 d'appareil de ce téléphone 5. Elle considère alors d'une manière automatique qu'elle connaît cet appareil. La station 20 et les circuits 21 envoient ensuite à l'appareil 5 un message d'acceptation pour lui dire qu'il est accepté dans le réseau géré par cette station de base 20. En fonction de la présence de l'information 22 dans la zone prioritaire privée, le téléphone 25 se commute, d'une utilisation d'une station de base publique 2 à une utilisation d'une station de base privée 20.

Avec la station de base privée 20 et les circuits 21 de gestion de celle-ci, il est alors possible d'effectuer deux opérations principales pour la protection de la zone 19. Premièrement par une opération 27 on informe le réseau de l'opérateur du circuit 4 que le téléphone 5 est maintenant sous la dépendance de la station de base 20. Deuxièmement, et essentiellement dans l'invention, par une opération 28 on neutralise les appels à destination du téléphone 5 ou que le téléphone 5 est susceptible d'émettre.

Par exemple au moment où le téléphone 5 commute, il informe la station de base 2 qu'il abandonne la couverture de celle-ci au profit de la couverture de la station de base 20. Dans ce cas l'information présente en zone 16 des circuits 4 se modifie pour correspondre maintenant aux indications relatives à la station de base 20. En pratique lorsqu'un poste 8 cherchera à joindre le téléphone 5, le réseau téléphonique commuté 9 transmettra l'appel aux circuits 4. Dans la mémoire 13 à la zone 16, les références de la station de base 20 et ses circuits de connexion 21 sont présentes de telle façon que le réseau 9 est à nouveau sollicité par les circuits 4 pour atteindre les circuits 21, par ailleurs reliés également au réseau téléphonique commuté 9. Dans ces conditions au lieu d'être transmissible par la station de base 2, une communication entrante est transmissible par la station de base 20.

Dans les circuits 21, la station de base prioritaire de l'invention comporte en plus de la mémoire 26, un processeur 29 et, une mémoire programme 30 reliés ensemble par un bus 31. Un programme 32 enregistré dans la mémoire programme 30 met en oeuvre les deux opérations 27 et 28 d'information du réseau et de protection de la zone. En variante en effet, si lors de l'abandon de la station de base 2 le téléphone 5 n'a pas prévenu les circuits 4 de son opérateur, cette alerte peut être effectuée par le programme 32 qui fait envoyer à cet opérateur (via le réseau 19) un message correspondant. Eventuellement l'information de l'opérateur 4 ne se produit même pas. Dans ce cas tout peut continuer comme si la station de base 2 gérait toujours le téléphone 5. Cependant, quand elle essaye d'alerter ce téléphone 5 de l'arrivée d'un appel entrant, le téléphone 5, qui de fait est géré par la station de base 20, suit alors un plan de fréquence et de synchronisation des trames temporelles tel qu'il n'y a aucune possibilité pour qu'il puisse capter des informations qui lui sont destinées et qui sont relatives à l'arrivée d'un appel entrant.

Si par contre l'opérateur des circuits 4 a été prévenu, les appels entrants sont acheminés par l'intermédiaire des circuits 21. Dans ce cas le programme 32 mettant en oeuvre une fonction de neutralisation n'achemine pas jusqu'au téléphone 5 l'appel qui lui est destiné. Dans ce cas, et dans le précédent, soit les circuits 21 soit les circuits 4 peuvent envoyer à l'interlocuteur qui émet l'appel un message d'échec de différents types. Dans un premier type, le message qui peut être retourné à l'appelant est un message d'indisponibilité de son correspondant, voire un message d'occupation de la ligne. De préférence, le message envoyé sera un message de mise en relation avec une boîte vocale. La boîte vocale peut être réalisée soit dans les circuits 4 soit dans les circuits 21. Dans un cas comme dans l'autre, une boîte vocale respectivement 33 ou 34 est associée à un enregistrement correspondant à un numéro d'abonnement ou à un numéro d'appareil. Dans le cas où une boîte vocale 33 serait utilisée, la neutralisation 28 sera réalisée par envoi, par l'intermédiaire du programme 32, d'une information des circuits 21 aux circuits 4 selon laquelle le téléphone mobile s'est mis en arrêt. Dans ce cas la commutation vers la boîte vocale 33 sera automatique : elle est prévue par l'opérateur des circuits 4.

En variante, les circuits 21 en mémoire, posséderont en regard de l'enregistrement de chaque appareil une zone mémoire formant une boîte vocale 34 pour enregistrer les messages destinés à un téléphone 5. Lorsque le détenteur du téléphone 5 quitte la zone 19, son téléphone devient incapable de se signaler à la station 20. Dans ces conditions celle-ci perd sa liaison avec ce téléphone 5. Au moment de cette perte, la station 20 et les circuits 21 émettent via le réseau 9 un appel du téléphone 5 pour lui transmettre les messages mémorisés. En variante, lors de sa reconnexion à la station de base 2 ou à une autre, le téléphone 5 est informé des messages stockés dans sa boîte vocale 33 pendant que ce téléphone 5 était sous la couverture de cette station 20.

En variante, la station 20 et les circuits 21 informent l'appelant que le détenteur du téléphone 5 est dans une zone sensible 19, neutralisée pour son téléphone mobile, mais qu'il sera à nouveau joignable à la fin de la représentation, à partir d'une certaine heure par exemple. Dans ce cas on envoie à l'appelant des informations sur la nature et/ou les conditions de la neutralisation.

Pour les appels sortants, la neutralisation est bien plus simple. A chaque tentative, la station de base 20 émet vers le téléphone mobile qui sollicite le réseau un message d'indisponibilité de ce dernier. Le téléphone 5 n'a alors pas possibilité de passer par une autre station de base que la station de base 20 puisqu'il est naturellement connecté avec elle comme étant la station de base prioritaire choisie par la zone 22. Le message envoyé au téléphone 5 peut être un message vocal ou un message de type SMS dont le contenu s'affiche sur l'écran du téléphone 5.

Ce fonctionnement peut ne pas être immuable. Notamment dans le cadre du fonctionnement d'un théâtre, on peut prévoir que la station de base 20 adoptera un fonctionnement comme ce qui vient d'être décrit uniquement pendant une période d'une représentation. Il faut alors gérer ce qui se passe à la fin de la représentation. Dans ce cas au moment où la représentation est terminée, la station de base 20 et les circuits 21 peuvent envoyer un message au téléphone 5 en lui indiquant que la station de base va se couper et lui enjoignant de rechercher une autre station de base. Un message de ce type est déjà connu. Il est un message de type dit hand over, de basculement. La particularité ici est que la station de base 20 abandonne la liaison avec le téléphone 5 sans l'accord d'une station de base 2 réceptrice. Dans ce cas le téléphone mobile recherchera parmi toutes les stations de base possibles, et non pas seulement celles qui sont privées, une station de base à laquelle il pourrait s'affilier. Il retombera alors naturellement sous la dépendance de la station de base 2 qui couvre, elle aussi, la zone 19.

Plutôt que d'avoir une base privée 20, il est possible d'installer dans chaque zone 19 une station de base supplémentaire qui deviendra prioritaire et qui est susceptible de supplanter une autre station de base 2 d'un réseau. Dans ce cas, la station de base prioritaire sera une station de base publique apte à se faire reconnaître de tous les téléphones mobiles situés dans sa zone de couverture. Cette base sera déclarée comme un nom de réseau prioritaire universel, tel que le PLMN (Public Land Mobile Network : réseau terrestre mobile public). Il comportera des moyens aptes à permettre la communication avec tout téléphone mobile quelque soit le réseau public auquel il est rattaché, grâce notamment à des accords dits d'itinérance, entre les différents réseaux publics.

Elle sera par exemple placée à l'intérieur de la zone 19 : dans la salle de théâtre.

La station de base prioritaire comportera des moyens pour indiquer aux téléphones mobiles situés dans sa zone de couverture, un caractère prioritaire, de sorte que le téléphone mobile se commute automatiquement en une utilisation de cette station de base prioritaire. Ainsi, par exemple, par sa puissance d'émission, elle sera reconnue comme la meilleure solution pour tous les téléphones mobiles présents dans la zone 19. Dans ce cas, les circuits 4 comporteront un choix préférentiel, au profit de cette station de base supplémentaire de la gestion de tous les téléphones mobiles qui sont sous sa dépendance. Dans ce cas, la notion de priorité résultera d'une meilleure qualité de communication avec les téléphones mobiles. De ce fait, chaque fois qu'un téléphone mobile arrivera dans l'environnement de la station de base prioritaire, un basculement (un hand over) sera provoqué de la station de base 2 vers la station de base prioritaire. Associé à cette station de base prioritaire sera réalisé dans les circuits 4 de l'opérateur un fonctionnement similaire à celui décrit pour les circuits 21. Un programme tel que 32 neutralisera les appels, au moins pendant la durée de la représentation.

Selon une autre réalisation de l'invention, la station de base prioritaire est un équipement 20', apte à communiquer avec les téléphones mobiles situés dans la zone qu'elle couvre au moyen d'un protocole de communication radio de faible portée, du type Bluetooth. De cette manière, les téléphones mobiles 5 situés dans sa zone de couverture voient l'équipement 20' comme un accessoire Bluetooth.

Cet équipement 20' comporte des moyens pour envoyer aux téléphones mobiles 5 situés dans sa zone de couverture, un message de déconnexion au réseau de radiocommunication auquel sont rattachés lesdits téléphones mobiles 5.

Dans un mode de réalisation particulier, on peut prévoir que le message M soit envoyé périodiquement par l'équipement 20'.

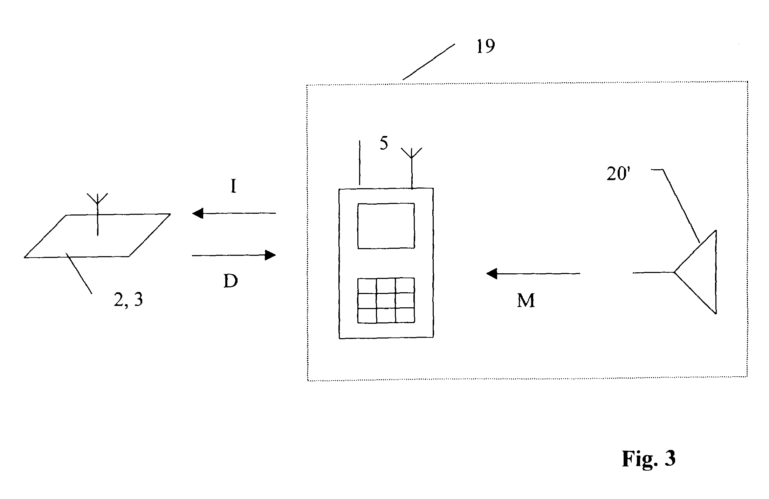

En référence à la figure 3, l'équipement 20' envoie le message M aux téléphones mobiles 5 qui le transmettent, I, à leur station de base respective 2, 3 à laquelle ils sont reliés. Celle-ci leur retourne alors un ordre de déconnexion D.

Ce procédé est transparent pour l'utilisateur. Par ailleurs, dès que le téléphone mobile 5 sort de ladite zone de couverture, il tentera de nouveau de se connecter à une station de base 2, 3 du réseau de radiocommunication.

## Revendications

1. Procédé de protection radioélectrique d'une zone (19) en téléphonie mobile, dans lequel
- on émet à partir de stations de base (2, 3) des appels entrants à destination des téléphones mobiles (5-7),
- on reçoit dans des stations de base des appels sortants émanant de téléphones mobiles,
- on place une station de base prioritaire (20) dans la zone et on neutralise (28) avec cette station de base prioritaire des accès aux téléphones mobiles qui s'y trouvent,
caractérisé en ce que la station de base prioritaire est apte à se faire reconnaître des téléphones mobiles quelques soient leurs caractéristiques d'abonnement.

2. Procédé selon la revendication 1, caractérisé en ce que
- on émet et on reçoit dans les téléphones mobiles selon un protocole déterminé,
- dans ce protocole déterminé, pour émettre et recevoir des appels d'un téléphone mobile, une station de base reconnaît (11, 15) une caractéristique d'abonnement de ce téléphone mobile à un réseau (4) de téléphonie mobile auquel cette station de base appartient, et en ce que
- dans la station de base prioritaire, on écarte (23, 25) les résultats de cette reconnaissance et on gère (25) la communication avec le téléphone mobile dans tous les cas.

3. Procédé selon la revendication 2, caractérisé en ce que
- le protocole est un protocole CTS qui admet des stations de base publiques et des stations de base privées,
- dans une station de base publique on reconnaît la caractéristique d'abonné,
- dans une station de base privée on reconnaît une caractéristique (12) d'acceptation,
- dans une station de base prioritaire, on écarte les résultats de ces reconnaissances et on gère la communication avec le téléphone mobile dans tous les cas.

4. Procédé selon la revendication 1, caractérisé en ce que la station de base prioritaire communique avec les téléphones mobiles qui se trouvent dans ladite zone (19) au moyen d'un protocole de communication radio de faible portée, du type Bluetooth.

5. Procédé selon la revendication 4, caractérisé en ce que la station de base prioritaire envoie aux téléphones mobiles se trouvant dans ladite zone (19) un message de déconnexion au réseau de radiocommunication auquel ils sont rattachés.

6. Procédé selon la revendication 4, caractérisé en ce que la station de base prioritaire est connectée au réseau public commuté et gère la communication avec les téléphones mobiles se trouvant dans ladite zone (19).

7. Procédé selon la revendication 3 ou 6, caractérisé en ce que
- la station de base prioritaire envoie au téléphone mobile un message lui indiquant un caractère de base privée,
- le téléphone mobile interprète ce message et se commute (22) automatiquement en une utilisation de cette base privée.

8. Procédé selon l'une des revendications 1 à 3, 6, 7, caractérisé en ce que
- pour neutraliser, on commute une utilisation du téléphone mobile d'un mode public à un mode privé en fonction d'une priorité (22) enregistrée dans le téléphone mobile.

9. Procédé selon la revendication 2, caractérisé en ce que la station de base prioritaire est une station de base publique apte à se faire reconnaître de tous les téléphones mobiles situés dans sa zone de couverture, quelques soient le réseau public auquel ils sont rattachés, la station de base prioritaire étant apte à gérer la communication avec lesdits téléphones mobiles.

10. Procédé selon la revendication 9, caractérisé en ce que la station de base prioritaire comporte des moyens pour indiquer aux dits téléphones mobiles un caractère prioritaire, de sorte que le téléphone mobile se commute automatiquement en une utilisation de cette station de base prioritaire.

11. Procédé selon l'une des revendications 1 à 3, 6 à 10, caractérisé en ce que pour neutraliser, on délivre pour des appels sortants un message d'indisponibilité.

12. Procédé selon l'une des revendications 1 à 3, 6 à 11, caractérisé en ce que pour neutraliser, on oriente des appels entrants sur une messagerie (33, 34).

13. Procédé selon la revendication 12, caractérisé en ce que
- on tient à jour une liste (26) des téléphones mobiles gérés par la station de base prioritaire,
- on mémorise des messages entrants dans une mémoire de messagerie, et
- on transmet aux téléphones mobiles qui ne sont plus dans la zone de cette station de base prioritaire des messages entrants mémorisés pendant qu'ils y étaient et qui les concernent.

14. Procédé selon la revendication 13, caractérisé en ce que pour mémoriser, on mémorise les messages dans une mémoire de messagerie de la station de base prioritaire.

15. Procédé selon l'une des revendications 1 à 14, caractérisé en ce que, pour neutraliser, on envoie à un interlocuteur absent des informations sur la nature et/ou les conditions de la neutralisation.
